# EUROPEAN PATENT APPLICATION

(11) **EP 2 273 724 A1**
(43) Date of publication of application: **12.01.2011**
(21) Application number: 09009034.1
(22) Date of filing: 10.07.2009
(51) Int. Cl.: H04L 12/24, G06F 9/46

(54) **An arrangement and a method to transfer data in a network using a tree structure format**

(71) Applicant: SIEMENS AKTIENGESELLSCHAFT, 80333 München (DE)
(72) Inventor: Thangiah, Leny, 560075 Bangalore (IN)

(57) **Abstract**

The invention enables data communication in a network environment in a platform independent way. The invention describes an arrangement (100) for sending data from a first node (102) to a second node (104) within a communication network. The arrangement has a definition (106), which defines a tree structure format (108) for data. Also the arrangement has a first module (110) associated with the first node (102) for converting the data in a first format (124) to the tree structure format (108) based on the definition (106), and a second module (112) associated with the second node (104) for receiving the data from the first node (102) and for converting the data in the tree structure format (108) into a second format (126) based on the definition (106).

## Description

The present invention relates to networking systems for communication in industry, particularly a network arrangement and a method of transferring data in a platform independent way.

In an industrial networking environment, there will be several network devices such as field devices, wireless access points, switches, routers, gateways etc. These devices need to communicate frequently to keep the network functioning properly with latest features available for the devices in the network. Communication would also cover the transmission and reception of diagnostic data. Typically there will be a node in the network, which accepts the data provided by the network devices. This node may need to further process or filter the received data.

If we take the scenario of diagnostic data communication and processing, the diagnostic data of each device is specific to that device. Because of this, a generic node will not be able to process the data sent by the network devices unless the data type information is also known. The diagnostic data is very specific to the diagnostic data provider. Most of the devices structure this type of data in complex ways. Some even have nested structures and array of structures, linked list etc. The main issue here is how to keep the structure of the data in tact, whether it is diagnostic data or non-diagnostic data and making it understandable to the generic node by making the said communication platform independent.

It is an object of the present invention to enable data communication in a network environment in a platform independent way.

The said object is achieved by providing an arrangement in the network according to claim 1 and by a method according to claim 10.

The underlying idea is to have an arrangement for sending data from a first node to a second node within a communication network. A first module associated with the first node converts the data in a first format, which is native to the first node to the tree structure format based on a definition. The definition basically defines a tree structure format for the data. Then a second module, associated with the second node receives the data from the first node and converts the data in the tree structure format into a second format, which is native to the second node based on the same definition. The definition basically helps the data to be in tact and to be in a well structured form. Using the same definition to convert the data in the first node into the tree structure format and for converting the data in the tree structure to a native format of the second node enables the first node and the second node to communicate data in a platform independent way.

In a preferred embodiment, the definition comprises the data type information. This enables the data type information of the first node, which is the sender of the data to be incorporated in the data when said data is converted to the tree structure format.

In a further preferred embodiment, the data in the tree structure format comprises the data type information. This enables the receiver, which is the second node, to understand which type of data the sender, which is the first node is actually sending.

In an alternative embodiment, the definition is defined in at least one definition file. Since the definition file can be defined in at least one file, the user has the flexibility of configuring the at least one definition file prior to the creation of the definition for the data to be represented in the tree structure.

In an alternative embodiment, the arrangement further comprises a parsing module adapted to parse the at least one definition file to obtain the definition. This provides the mechanism to validate all the definition files, which may be configured by a user, to build the actual definition for the data to be represented in the tree structure.

In another alternative embodiment, the arrangement further comprises a communication channel between the first node and the second node, capable of transporting the data in the tree structure format. This enables the data transfer and the said channel could be wired or wireless channel.

In another alternative embodiment, the parsing module is adapted to generate a first set of code for the first module and a second set of code for the second module from the at least one definition file. These codes are based on the definition, and are intended to be used in the first node and the second node to convert the data into a tree structure format and to reconvert to the required format respectively.

In another alternative embodiment, the data type information is defined for a structure element in the tree structure format. This will enable to map the actual data type information with a specific data category.

In another alternative embodiment, the tree structure format is a hierarchical data structure defined using parent dataset and/or child dataset connected by a relationship. This provides a more structured data representation and enables to keep the structure of the data intact.

The present invention is further described hereinafter with reference to illustrated embodiments shown in the accompanying drawings, in which:
FIG 1 illustrates a block diagram of a network arrangement for sending data from a first node to a second node within a communication network,
FIG 2 illustrates a representation of data in the form of a tree structure,
FIG 3 illustrates a tree structure, which provides information on the memory consumption of a processor, and
FIG 4 illustrates a flow chart, which explains a method of sending data from a first node to a second node within a communication network.

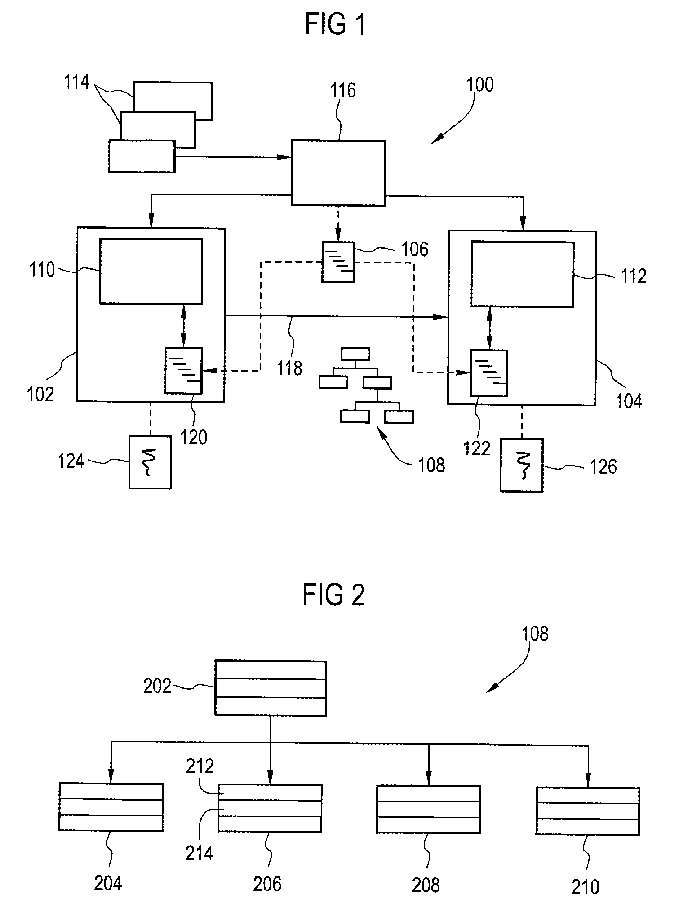

FIG 1 illustrates a block diagram of a network arrangement 100 for sending data from a first node 102 to a second node 104 within a communication network. The definitions for the data that need to be sent from a first node 102 and its representation will be defined in definition files 114. The definition file 114 is user configurable. Also the actual definition 106 that is required for the actual data might be present in one or more than one definition file 114. Hence the definition files 114 need to be parsed to obtain the actual definition 106. Hence, the arrangement 100 further has a parsing module 116 adapted to parse the at least one definition file 114 to obtain the definition 106. Basically the definition 106 defines a tree structure format (108) for data.

A first module 110 associated with the first node 102 converts the data in a first format 124 to the tree structure format 108 based on the definition 106. The first format 124 is the native format of the first node 102. The requirement here is to make the second node 104 understand the data in this native format. For that, the data associated with the first node 102 in the first format 124 which is in the native format is converted to a tree structure format 108 and send to the second node 104.

A second module 112 associated with the second node 104 receives the data from the first node 102 in the tree structure format 108 and converts the data in the tree structure format 108 into a second format 126 based on the definition 106. The second format 126 is the native format of the second node 104. Basically the definition 106 is needed by the first node 102 to convert the data in its native format to a tree structure format 108 and also needed by the second node 104 to convert the data received in the form of the tree structure 108 to a native format associated with the said second node 104. The data in the tree structure format 108 carries the data type information 214 as shown in FIG 2. It is also possible to have the data type information defined in the definition 106, so that the first node 102 and the second node 104 could communicate using the tree structure format 108. The native format referred here could be for example c, c++, Java, C# or any other format.

The definition 106, which is obtained after parsing the definition file 114, will have a first set of code 120 for the first module 110 and a second set of code 122 for the second module 112. Since these codes are based on the definition 106, it is actually this first set of code 120, which helps the first node 102 to convert the data in its native format to a tree structure format 108 and the second set of code 122 which help the second node 104 to convert the data received in the form of the tree structure 108 to a native format associated with the said second node 104. The code, explained here could be interpreted as instructions which could be independently executed or could be built with an application and can be executed along with the execution of said application. The first node 102 and the second node 104 are capable of communicating through a communication channel 118. The said channel could be wired or a wireless channel.

FIG 2 illustrates a representation of data in the form of a tree structure format 108. The tree structure format 108 is a hierarchical data structure defined using parent dataset 202 and/or child dataset 204, 206, 208, 210 connected by a relationship. It is possible to have multiple child datasets for a parent dataset. Even a child dataset can have further sub child dataset or datasets. FIG 2 is provided to have a basic idea of the data representation and it should not be considered as limiting in any way. The data type information 214 also gets defined for a structure element 212 in a dataset which is presented in the tree structure format 108.

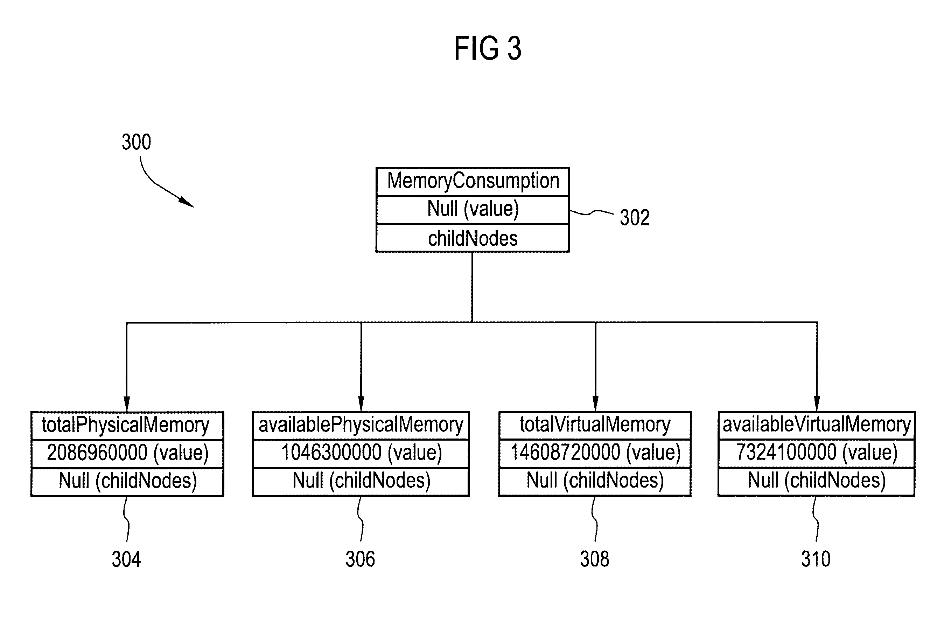

FIG 3 illustrates a tree structure, which provides information on the memory consumption of a processor. This is an example of how a simple C++ structure could be exported using the tree structure format 108 to a generic node in a platform independent way.

For each set of data, the definition will have a structure defined, which looks like this.

```
   struct Tree
   {
     String name;
     Variant value;
     Tree* childNodes;
    };
```

The C++ structure which needs to be communicated to the generic node is as follows:

```
   Typedef struct MemoryConsumption
   {
     sInt32 totalPhysicalMemory;
     sInt32 availablePhysicalMemory;
     sInt32 totalVirtualMemory;
     sInt32 availableVirtualMemory;
   };
```

In the tree structure 300 as shown in FIG 3, MemoryConsumption is the name of the root dataset 302, which is same as the name of the structure. It has four child datasets (304, 306, 308, 310) as described in the C++ structure. Here all the child datasets represent integer values. Since the value is of variant type, it can hold any data type that is supported by the variant definition.

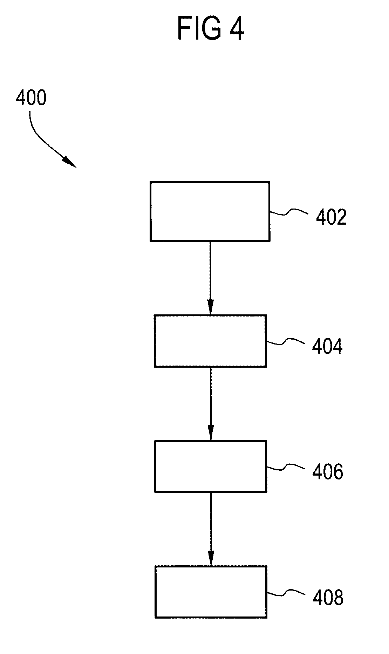

FIG 4 illustrates a flow chart 400, which explains a method of sending data from a first node 102 to a second node 104 within a communication network. The method involves defining a tree structure format 108 for data by a definition 106 as shown in step 402. This could be done by parsing the at least one definition file 114 by a parsing module 116. At step 404 the data in a first format 124 is converted to the tree structure format 108 by a first module 110 associated with the first node 102 based on the definition 106. At step 406 the data in the tree structure format 108 which is send by the first module 102 is received by the second module 104. Finally at step 408, the data in the tree structure format 108 is converted into a second format 126 by a second module 112 associated with the second node 104 based on the definition 106.

Summarizing, the invention enable a platform independent communication for network devices. Providing data in this tree structure form 108 enables uniform access of, even the complex data types with the structure of the data intact. By exporting the type information of the data along with the data would make a network device node to work with all other network specific devices. Hence the device node does not need to ask for the type information in a separate request to a data sending node. If the data and the type information are received separately, the data has to be correlated against the type information. This step is avoided if the type information is embedded with the data, which is the case when the data is communicated in the tree structure format. Once the data type information is known, further processing or filtering of the data could be performed.

Although the invention has been described with reference to specific embodiments, this description is not meant to be construed in a limiting sense. Various modifications of the disclosed embodiments, as well as alternate embodiments of the invention, will become apparent to persons skilled in the art upon reference to the description of the invention. It is therefore contemplated that such modifications can be made without departing from the embodiments of the present invention as defined.

## Claims

1. An arrangement (100) for sending data from a first node (102) to a second node (104) within a communication network comprising:
- a definition (106), defining a tree structure format (108) for data;
- a first module (110) associated with the first node (102) for converting the data in a first format (124) to the tree structure format (108) based on the definition (106), and
- a second module (112) associated with the second node (104) for receiving the data from the first node (102) and for converting the data in the tree structure format (108) into a second format (126) based on the definition (106).

2. The arrangement (100) according to claim 1, wherein the definition (106) comprises the data type information (214).

3. The arrangement (100) according to claim 1, wherein the data in the tree structure format (108) comprises the data type information (214).

4. The arrangement (100) according to claim 1, wherein the definition (106) is defined in at least one definition file (114).

5. The arrangement (100) according to claim 1, further comprises a parsing module (116) adapted to parse the at least one definition file (114) to obtain the definition (106).

6. The arrangement (100) according to claim 1, further comprises a communication channel (118) between the first node (102) and the second node (104), capable of transporting the data in the tree structure format (108).

7. The arrangement (100) according to claim 1, wherein the parsing module (116) is adapted to generate a first set of code (120) for the first module (110) and a second set of code (122) for the second module (112) from the at least one definition file (114).

8. The arrangement (100) according to claim 1, wherein the data type information (214) is defined for a structure element (212) in the tree structure format (108).

9. The arrangement (100) according to claim 1, wherein the tree structure format (108) is a hierarchical data structure defined using parent dataset(202) and/or child dataset (204, 206, 208, 210) connected by a relationship.

10. A method of sending data from a first node (102) to a second node (104) within a communication network comprising:
- defining a tree structure format (108) for data by a definition (106);
- converting the data in a first format (124) to the tree structure format (108) by a first module (110) associated with the first node (102) based on the definition (106), and
- receiving the data from the first node (102) and converting the data in the tree structure format (108) into a second format (126) by a second module (112) associated with the second node (104) based on the definition (106).

11. The method according to claim 10, wherein the definition (106) comprises the data type information (214).

12. The method according to claim 10, wherein the data in the tree structure format (108) comprises the data type information (214).

13. The method according to claim 10, wherein the definition (106) is defined in at least one definition file (114).

14. The method according to claim 10, further comprises parsing the at least one definition file (114) to obtain the definition (106) by a parsing module (116).

15. The method according to claim 10, wherein the parsing module (116) is adapted to generate a first set of code (120) for the first module (110) and a second set of code (122) for the second module (112) from the at least one definition file (114).
